# EUROPÄISCHE PATENTANMELDUNG

(11) **EP 1 935 646 A2**
(43) Veröffentlichungstag der Anmeldung: **25.06.2008**
(21) Anmeldenummer: 07024034.6
(22) Anmeldetag: 12.12.2007
(51) Int. Cl.: B41F 33/00

(54) **Messeinheit für die fortlaufende, automatische Erfassung von Farbdaten**

(30) Priorität: 21.12.2006 DE 102006061997
(71) Anmelder: Techkon GmbH, 61462 Königstein (DE)
(72) Erfinder: Krzyminski, Ulrich, 61467 Kronberg (DE)
(74) Vertreter: Säger, Manfred

(57) **Zusammenfassung**

Es ist eine Mess-Einheit mit Sensoren für die fortlaufende, automatische Erfassung von Farbdaten eines Druckkontrollstreifens insbesondere durch Remissionsmessungen von farbig gedruckten Druckbogen an einer laufenden Druckmaschine, der auf dem Auslagestapel eines eine automatische Stapelabsenkung aufweisenden Druckbogenauslegers abgelegt wird, gekennzeichnet durch ein die Messeinheit ein den Druckkontrollstreifen des bezüglich der schon abgelegten Druckbögen deckungsgleich zu oberst auf dem Auslagestapel abgelegten Druckbogens abtastendes Mess-Teil und durch eine zumindest während der Messung dieses obersten Druckbogens das Absenken deckungsgleich zu und über diesem abgelegter, weiterer Druckbogen hindernde Ausbildung.

## Beschreibung

Die Erfindung betrifft eine gattungsgemässe Mess-Einheit mit Sensoren für die fortlaufende, automatische Erfassung von Farbdaten eines Druckkontrollstreifens, insbesondere durch Remissionsmessungen von farbig gedruckten Druckbogen an einer laufenden Druckmaschine, der auf dem Auslagestapel eines eine automatische Stapelabsenkung aufweisenden Druckbogenauslegers abgelegt wird.

Vorrichtungen zur Beurteilung und Regelung des Farbauftrags mit der Zielsetzung einer konstanten und bekannten Farbwiedergabe über die gesamte Druckauflage an Druckmaschinen sind in verschiedener technischer Komplexität und verschiedenen Automatisierungsgraden bekannt.

Technisch einfache jedoch manuell aufwändige Ausführungen stellen sogenannte Abtast- oder Scan-Farbdensitometer und -Spektralphotometer dar, die ausserhalb der Druckmaschine an einem gesonderten Abstimmtisch eingesetzt werden: der Anwender entnimmt am Druckbogenausleger der laufenden Druckmaschine einen Druckbogen, der am Bogenrand quer zur Druckrichtung einen Druckkontrollstreifen mit Kontrollelementen enthält. Dieser Druckkontrollstreifen wird mit einem motorisch angetriebenen (US-A-5,073,028) oder von Hand geführten Messkopf (DE-19716066-C1) linear abgetastet. Die ermittelten densitometrischen, farbmetrischen oder spektralen Farbdaten werden dann als Regelempfehlungen der Druckmaschine direkt in Form von Einstelldaten oder durch manuelle Einstellungen des Bedienpersonals zur Farbsteuerung der Druckmaschine verwendet.

Obgleich mit Vorteil eine technisch einfache, zuverlässige Konstruktion, verbunden mit der weitgehenden Unabhängigkeit von der konstruktiven Bauform der Druckmaschine vorliegt, liegt der Nachteil dieser technischen Lösungen in dem manuellen Aufwand durch den Benutzer verbunden mit möglicher Fehleranfälligkeit durch Fehlbedienung und der grossen und willkürlichen Zeitspanne zwischen manueller Entnahme des Druckbogens und Bereitstellung der Farbsteuerdaten.

Einen wesentlich höheren Automatisierungsgrad liefern sogenannte "In-Line"-Mess- und Regelanlagen, die konstruktiv in Druckmaschinen integriert sind (DE 102004021601 A1). Hier werden bei laufender Druckmaschine am bewegten Druckbogen an geeigneter Stelle Farbmessungen durch Farbsensoren durchgeführt.

Der Anwender wird hierbei komplett vom Messvorgang entlastet und die Regelempfehlungen werden gegebenenfalls automatisch zur Steuerung der Maschine verwendet. Der Nachteil solcher Systeme ist der hohe technische Aufwand, verbunden mit Fehleranfälligkeit und Unwirtschaftlichkeit, die zusätzlich dadurch erhöht wird, dass zu jedem Druckmaschinentyp eine konstruktiv spezifische Lösung entwickelt und hergestellt werden muss. Das Mess-System ist auch mit hohem technischen Aufwand gegen die rauen Bedingungen wie Vibration und Verschmutzung durch Farbnebel, Papierstaub und Druckpuder zu schützen. Durch die hohe Durchlaufgeschwindigkeit des Druckbogens ist die reale Messdauer pro Kontrollelement entsprechend kurz und der Zeitpunkt der Messung muss technisch aufwändig exakt synchronisiert werden. Durch geometrische Einschränkungen bei der Positionierung des Farbsensors und die kurze Messzeit sind die Kontrollelemente auf dem Druckbogen nur an bestimmten Stellen und in bestimmter geometrischer Ausführung möglich, was den Informationsgehalt der zu ermittelnden Farbdaten einschränkt. Ein weiterer Nachteil der "In-Line"-Systeme besteht darin, dass die Messung des Druckbogens an einer Stelle im Druckprozess erfolgt, an dem der Bogen noch nicht in seinem endgültigen Fertigungszustand, z.B. mit noch feuchter und damit glänzender Oberfläche vorliegt. Auf dem Weg des Druckbogens durch die Druckmaschine von der Stelle der "In-Line"-Messung bis zum Ort der Bogenablage treten Farbveränderungen durch Trocknungseffekte von Papier und Farbe sowie durch in der Maschine durchgeführte Veredlungs- und Finishing-Prozesse auf. Diese Einschränkungen der "In-Line"-Messung führen dazu, dass eine normgerechte Farbmessung wie sie für die Druckindustrie unter anderem in den Normen ISO 12647 und ISO 13655 gefordert wird, nur eingeschränkt möglich ist.

Es sind auch gattungsgemässe Mess-Einheiten bekannt (DE 199 39 154 A), bei denen der zu messende Druckbogen auf eine Weiche und von diser zu einem entfernten Ort gelangt, dort gemessen und auf einem separaten Auslagestapel von der gemessenen Druckbogen abgelegt wird, was insoweit von Nachteil ist, als der andere -ungemessene- Auslagestapel nicht alle zur weiteren Verarbeitung notwendigen Druckbogen aufweist.

Es ist schliesslich eine gattungsgemässe Mess-Einheit bekannt (DE 42 07 107 C1), bei der ein zu messener Druckbogen so versetzt auf den Auslagestapel abgelegt wird, dass der Druckkontrollstreifen durch die weiter unversetzt abgelegten Druckbögen nicht verdeckt und somit mittels der Mess-Einheit gelesen werden kann. Auch dieser Auslagestapel kann wegen der nicht kantengenauen Ablage der gemessenen Druckbogen nicht direkt weiterverarbeitet werden.

Der Erfindung liegt daher die Aufgabe zugrunde, eine gattungsgemässe Mess-Einheit so weiterzubilden, dass damit laufend automatisch normgerechte Messungen des Druckkontrollstreifens vorgenommen werden können, ohne dass dadurch die kantengenaue Ablage aller Druckbogen im Auslagestapel beeinträchtigt wird.

Diese Aufgabe wird erfindungsgemäss bei einer gattungsgemässen Mess-Einheit nach dem Oberbegriff des Hauptanspruchs erfindungsgemäss durch dessen kennzeichnende Merkmale also gelöst durch ein die Messeinheit ein den Druckkontrollstreifen des bezüglich der schon abgelegten Druckbögen deckungsgleich zu oberst auf dem Auslagestapel abgelegten Druckbogens abtastendes Mess-Teil und durch eine zumindest während der Messung dieses obersten Druckbogens das Absenken deckungsgleich zu und über diesem abgelegter, weiterer Druckbogen hindernde Ausbildung.

Mit der Erfindung wird also eine Mess-Einheit im Bereich des Druckbogenauslegers der Druckmaschine bereitgestellt, welcher Bereich grundsätzlich gut zugänglich ist und deshalb insbesondere auch für eine nachträgliche Montage geeignet ist. Weiterhin hat der zuoberst auf der Oberseite des Auslagestapels des Druckbogenauslegers abgelegte Druckbogen seinen endgültigen Fertigungszustand erreicht, so dass eine genaue Messung der Farbe im Endzustand, und nicht, wie bei den bekannten In-Line-Messungen nach dem Stande der Technik, noch im Zustand des Entstehens des Drucks erfolgen kann. Schliesslich ist der Druckbogen in seinem auf dem Auslagestapel des Druckbogenauslegers abgelegten Zustand auch nicht mehr in Bewegung, wodurch eine schnellere und genauere Messung ohne weiteren konstruktiven sowie Messaufwand erzielt werden kann. Während der Durchführung der Remissionsmessung an dem Druckkontrollstreifen durch das Mess-Teil werden weitere, frisch gedruckte Druckbogen, die aus der laufenden Druckmaschine kommen und deckungsgleich zu dem gerade gemessenen Druckbogen auf dem Auslagestapel abgelegt werden, weil durch zumindest während der Messung dieses obersten Druckbogens das Absinken der zu und über diesem abgelegten weiteren Druckbogen verhindert wird.

Der Vorteil der Erfindung besteht also in der unabhängig von der Bauform der Druckmaschine laufend und automatisch möglichen normgerechten Messung in kurz aufeinanderfolgenden Zeitintervallen am nicht bewegten und fertiggestellten Druckbogen und der kantengenauen Ablage sämtlicher Druckbaogen für den Auslagestapel. Ein solcher kantenbündiger Auslagestapel ist die Voraussetzung für die notwendigen Weiterverarbeitungsschritte wie Schneiden, Stanzen, Lochen und Heften oder Binden zum fertigen Druckprodukt.

Der Benutzer der Druckmaschine ist also komplett von der manuellen Messaufgabe an dem gesonderten Abstimmtisch nach dem Stand der Technik befreit, die am fertig gedruckten Druckbogen am Ort der Bogenauslage durchführt werden kann. Die erfindungsgemässe Einrichtung ist damit wesentlich wirtschaftlicher herstellbar und technisch zuverlässiger als die bekannten "In-Line"-Mess- und -Regelanlagen zu betreiben und hat dabei einen vergleichbar hohen Automatisierungsgrad; d.h. sie dient der schnellen und kontinuierlich wiederholenden Messung und Regelung und damit auch der Arbeitsentlastung des Bedienpersonals.

Wird bei einer ersten vorteilhaften Ausführungsform das als Messkopf ausgebildete Mess-Teil im Bereich des Geradestossers längs der Achse bewegt, so muss selbstredend sichergestellt sein, dass er nicht mit dem Geradestosser kollidiert oder dessen Funktionsweise stört. Der Geradestosser muss dann so ausgebildet sein, dass er während des Abtastvorgangs des Messkopfs automatisch aus dessen Bewegungsbereich ausgeschwenkt wird, wodurch seine Funktion nur für kurze Zeit und ohne Nachteil unterbrochen wird. Erfindungsgemäss kann aber die Mess-Einheit und/oder der Messkopf durch geometrische Form und mechanische Bewegung zusätzlich die Funktion des Geradestoßers des Auslagestapels übernehmen.

Die Übertragung der von dem Messkopf gemessenen Messdaten kann an eine Steuer- , Regel- oder Anzeigeeinheit wahlweise über Datenkabel oder kabellose Funkübertragung während oder nach Abschluss des Abtastvorgangs erfolgen. Die Steuerung des Mess-Systems und die Verarbeitung der Messdaten kann ganz oder teilweise durch eine Steuer- und Auswerteelektronik innerhalb oder ganz oder teilweise ausserhalb der Mess-Einheit z.B. durch ein externes Steuer- und Datenverarbeitungsgerät oder durch die Steuerungselektronik der Druckmaschine erfolgen.

Wenn der Messkopf der Mess-Einheit möglichst flach und linsenförmig ausgestaltet ist und überdies zum Rand hin klingenförmig ausläuft, legen sich mit Vorteil die Druckbogen, die während des Abtastvorgangs auf dem Messkopf der Mess-Einheit abglegt werden, gut anbeschmiegt und ohne zu knicken ab. Um dies zu fördern, kann der Messkopf mit Lichtleiter- oder Strahlumlenkungskomponenten ausgestattet sein, so dass eine möglichst flache Bauweise der Mess-Einheit erzielt werden kann.

Diese Schonung der von oben auf den Messkopf abgelegten Druckbogen kann noch erhöht werden, wenn in zweckmässiger Ausgestaltung der Erfindung die Mess-Einheit mit Luftdüsen ausgestattet ist, die durch geregelte, ausströmende Luft zwischen dem Messkopf der Mess-Einheit und dem darüber abgelegten Druckbogen ein Luftpolster mittels eines Gebläses oder durch Druckluft erzeugen. Alternativ dazu kann ein über den Bewegungsweg der Mess-Einheit ein- sowie ausschwekbarer Distanzhalter vorgesehen sein, der vorzugsweise mit dem Geradestosser oder der Mess-Einheit selbst gekoppelt oder synchronisiert ist, wodurch verhindert wird, dass der über der Mess-Einheit oder entlang der Bogenkante ankommende Druckbogen die Mess-Einheit berührt. Dabei wird der Distanzhalter vor dem Messvorgang ein- und danach ausgeschwenkt.

Zweckmässigerweise wird der Startzeitpunkt der Abtastbewegung der Mess-Einheit mit einem Triggersignal der Druckmaschine gekoppelt, um eine Kollision der Mess-Einheit mit Druckbogen, die gerade abgelegt werden, zu vermeiden. Hierbei kann auch mindest ein zusätzlicher Sensor an der Druckmaschine oder deren Peripherie oder an der Mess-Einheit vorgesehen werden.

Mit Vorteil kann die Achse der Mess-Einheit rechtwinklig zu ihrer Erstreckung, also von der Oberzu ihrer Unterseite auf und ab und/oder rechtwinklig dazu hin und her oszillierend angetrieben sein und dabei die Funktion des ansonsten vorgesehehen Geradestossers übernehmen oder ergänzen.

Die Einstellung des vertikalen Abstandes der Mess-Einheit oder des Messkopfes über dem obersten Druckbogen kann vorteilhafterweise automatisch in Verbindung mit einer Regelstrecke bestehend aus einem Abstandssensor und einem Vertikalantrieb erfolgen, so dass keine Berührung der Mess-Einheit mit der Oberseite des obersten Druckbogens stattfindet.

Zweckmässigerweise ist die Achse der Mess-Einheit rechtwinklig zu ihrer Erstreckung, also von der Oberzu ihrer Unterseite auf und ab und/oder rechtwinklig dazu hin und her oszillierend unter Bildung eines Geradestossers bewegbar angetrieben.

Mit Vorteil ist die Mess-Einheit und/oder der Messkopf zu Reinigungs- und Wartungszwecken leicht abnehmbar oder schwenkbar gestaltet.

Zur Erzielung einer möglichst breiten Anwendungspalette werden neben oder anstatt der Remissionsmessungen zur Farbbeurteilung andere Sensoren wie z.B. zur Messung der Glanzreflexion, der Messung des Härtegrades von Lacken und Farben oder zur Bildanalyse in dem Messkopf verwendet.

Auch ist es möglich, zugleich oder anstelle der Farbmessung Messungen an der Widerdruckseite der Druckbogen durchzuführen, wenn der der Messkopf umgekehrt montiert ist oder zusätzlich mit einer zweiten Messöffnung nebst zugehörigen Zusatzsensoren versehen ist.

Wenn die als Mess-Teil ausgebildete Mess-Einheit mehrere in Richtung der Achse nebeneinander nach Art einer Zeile angeordnete Sensoren und/oder Messköpfe aufweist, so kann damit in vorteilhafter Weise ein bestimmtes Messfeld oder die gesamte Länge des Druckkontrollstreifens auf ein Mal erfasst werden.

Mit Vorteil ist nicht der Messkopf selbst so gestaltet, dass er das Absenken zu und über dem obersten Druckbogen abgelegter, weiterer Druckbogen zumindest im Bereich des Druckkontrollstreifens verhindert, sondern es kann in alternativer Ausgestaltung der Erfindung ein über dem Bewegungsweg des Mess-Teils in den Bereich des Auslagestapels einsowie ausschwekbarer Distanzhalter vorgesehen sein, der zweckmässigerweise mit dem Geradestosser oder der Mess-Einheit selbst gekoppelt oder synchronisiert ist.

Weitere zweckmässige Ausgestaltungen und Weiterbildungen sind in den restlichen Unteransprüchen gekennzeichnet.

Ein Ausführungsbeispiel der Erfindung wird nachfolgend unter Bezugnahme auf die Zeichnung erläutert. In dieser zeigt:
- Figur 1: Eine Druckmaschine, im schematischen Schnitt im Bereich des Auslagestapels des Druckbogenauslegers;
- Figur 2: den Auslagestapel mit der Mess-Einheit, in perspektivischer Darstellung und
- Figur 3: die Mess-Einheit nach Figur 2, im schematischen Querschnitt.

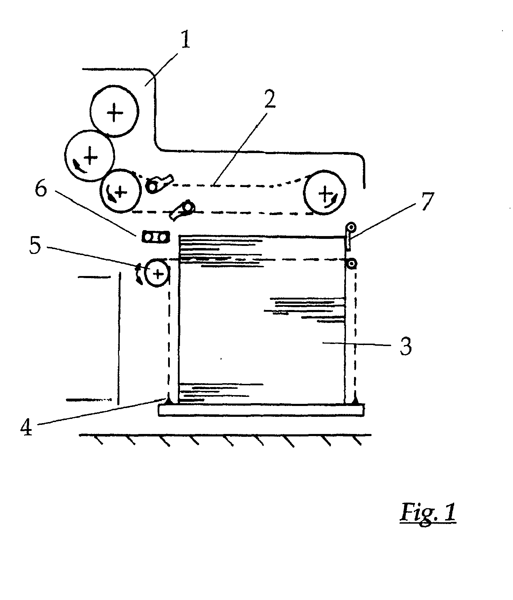

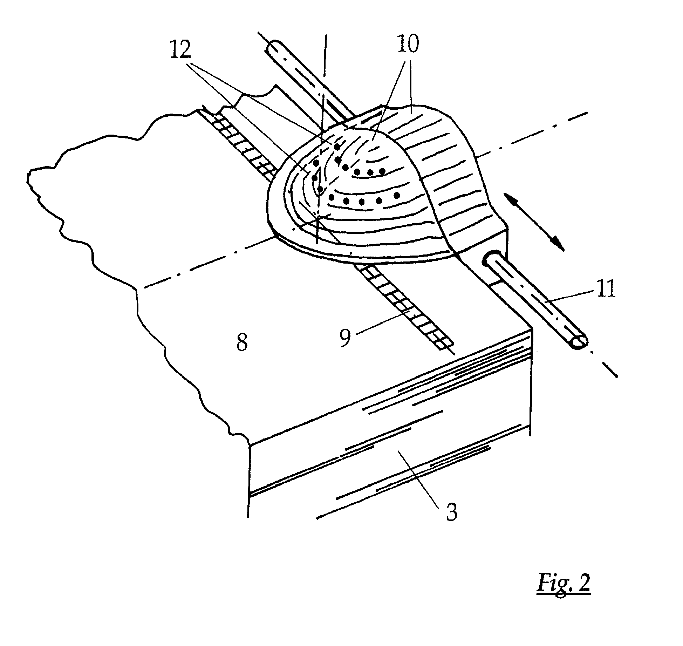

Das Ende einer in Figur 1 gezeigten Druckmaschine 1, zeigt beispielhaft einen Druckbogenausleger, wie er bei modernen Bogenoffsetdruckmaschinen vorhanden ist, um Druckbogen 8 (Figur 2) über einen Kettenantrieb 2 mit Greiferelementen auf dem Auslagestapel 3 der Druckmaschine 1 abzugelegen. Der Auslagestapel 3, der im Laufe des Druckprozesses mehr und mehr Druckbogen 8 aufnimmt, kann durch eine automatische Stapelabsenkung 4 herabgesenkt werden, so dass sichergestellt ist, das frisch gedruckte Druckbogen 8 immer auf gleicher Höhe abgelegt werden. Das vertikale Absenken des Auslagestapels 3 erfolgt automatisch durch einen Motor 5 und wird von nicht dargestellten Sensoren gesteuert.

Eine aus Bremsrollen oder -bändern bestehende Bogenbremse 6 bremst den Druckogen 8 von der hohen Druckgeschwindigkeit ab, so dass er auf dem Auslagestapel 3 zum liegen kommt. Eine kantenglatte Stapelbildung ist für die spätere Weiterverarbeitung der Druckbogen 8 erforderlich. Ein oszillierender Geradestosser 7 am Ende des Druckbogenauslegers stellt sicher, dass jeder Druckbogen positionsgenau auf dem Auslagestapel 3 liegt.

Fig 2. zeigt im perspektivischen Ausschnitt eine Ausführungsform der im Bereich des Druckbogenauslegers in Höhe der Oberseite des Auslagestapels 3 angeordneten Mess-Einheit 10 für die fortlaufende, automatische Erfassung der Farbdaten, z.B. durch Remissionsmessungen des mit auf den farbigen Druckbogen 8 zugleich mit aufgedrucktem Druckkontrollstreifen 9 bei laufender Druckmaschine 1.

Die Mess-Einheit 10 ist mit einem Sensor 18 und eine zu der Unterseite hin offenen Messöffnung aufweisenden Messkopf 13 mit einem Gehäuse versehen, welcher linear längs einer Achse 11 auf dem obersten, auf dem Auslagestapel 3 abgelegten Druckbogen 8 unter gleichzeitiger Abtastung des Druckkontrollstreifens 9 mittels eines Antriebes manuell oder motorisch entlangbewegbar ist.

Das Gehäuse des Messkopfes 13 der Mess-Einheit 10 weist auf seiner, der Unterseite mit der Messöffnung abgewandten Oberseite Luftdüsen 12 auf. Auf der Unterseite ist der Messkopf 13 zur Unterstützung der Abtastbewegung mit ggf. auch angetriebenen Abstandsrollen 14 versehen.

Zwecks mittiger Positionierung des Messkopfs 13 der Mess-Einheit 10 über dem Druckkontrollstreifen 9 ist er gemäss Richtungspfeil 15 quer zur sich längs der Achse 11 erstreckeden Abtastrichtung hin und her über einen Lineartrieb 16 manuell oder motorisch bewegbar.

Die Mess-Einheit 10 ist konstruktiv so ausgelegt, dass sie den längs auf dem Druckbogen 8 befindlichen Druckkontrollstreifen 9 motorisch abtastet, ohne mit dem Geradestosser 7 zu kollidieren oder seine Funktionsweise überhaupt zu stören. Weiterhin muss sichergestellt sein, dass die Mess-Einheit 10 keine weiteren Funktionen der Druckmaschine 1 wie z.B. die Makulaturweiche oder die manuelle Druckbogenentnahme beeinträchtigt. Der Geradestosser 7 muss so ausgelegt sein, dass er während des Messvorgangs automatisch aus dem Bewegungsbereich der Mess-Einheit 10 ausgeschwenkt wird, wodurch seine Funktion nur für kurze Zeit ohne Nachteil unterbrochen wird.

Es ist auch möglich, die Mess-Einheit 10 und Geradestosser 7 in einem System zu vereinen und so die Funktionen der Farbmessung sowie des kantengenauen Positionierens und Stapelns der Druckbogen 8 sicherzustellen. Alternativ kann die Mess-Einheit 10 auch im Bereich der Bogenbremse 6 angeordnet sein.

Die Mess-Einheit 10 bewegt sich auf dem obersten Druckbogen 8 des Auslagestapels 3 entlang des Druckkontrollstreifens 9. Die Mess-Einheit 10 ist von der äusseren Form so ausgebildet, dass sie erstens die Funktion des Geradestoßens der oberen, abgelegten Druckbogen 8 erfüllt und zweitens sichergestellt ist, dass während des Betriebs der Druckmaschine 1 weitere Druckbogen 8 abgelegt werden können und dabei die Mess-Einheit 10 weiterhin den Abtastvorgang durchführen kann. Dies wird dadurch erreicht, dass die Oberseite der Mess-Einheit 10 möglichst flach und linsenförmig ausgestaltet ist und zum Rand hin klingenartig ausläuft. Während der hin- und her erfolgenden Abtastbewegung der Mess-Einheit 10, die durch eine Achse 11 vorgegeben wird, werden laufend frisch gedruckte Druckogen 8 auf dem Auslagestapel 3 und auf den Messkopf 13 der Mess-Einheit 10 abgelegt, die sich an dessen äussere Kontur anschmiegen ohne dabei zu knicken. Der Messkopf 13 der Mess-Einheit 10 durchschneidet dabei quasi den oberen Teil des Auslagestapels 3 in Abtastrichtung. Das ungehinderte Hindurchgleiten kann zusätzlich durch Düsen 12 unterstützt werden, die durch ausströmende Luft zwischen dem Messkopf 13 der Mess-Einheit 10 und dem darüber neu abgelegten Druckbogen 8 ein Luftkissen erzeugen.

Bei einer geschätzten Abtastdauer eines kompletten Druckkontrollstreifens 9 von fünf Sekunden und einer angenommenen Druckleistung von 10.000 Druchbogen/Stunde fallen demnach während des Abtastvorgangs ca. 14 Bogen 8 auf die Mess-Einheit 10. Zum Ende der Abtastung fährt die Mess-Einheit 10 aus dem Auslagestapel 3 heraus, so dass die Druckbogen 8, die sich während der Abtastung auf die Mess-Einheit 10 gelegt hatten, nun flächig auf dem Auslagestapel 3 zum liegen kommen und gerade gestossen werden können.

Zu Beginn der Abtastung befindet sich die Mess-Einheit 10 außerhalb des Auslagestapels 3. Durch einen nicht dargestellten Absenk- und Bewegungsmechanismus der Mess-Einheit 10 kann sichergestellt werden, dass diese sicher auf dem obersten Druckbogen 8 positioniert wird.

Um eine Kollision der Mess-Einheit 10 mit Druckbogen 8, die gerade abgelegt werden, zu vermeiden, kann ein Triggersignal der Druckmaschine 1 herangezogen werden, das den richtigen Zeitpunkt für einen kollisionsfreien Start des Abtastvorgangs der Mess-Einheit 10 vorgibt. Alternativ können Sensoren an geeigneten Stellen des Druckbogenauslegers positioniert sein, die das Ablegen eines Druckbogens 8 detektieren. Aus dem gewonnenen Sensorsignal wird dann mit Hilfe einer Auswerteelektronik ein Triggersignal erzeugt, das als Startsignal für ein kollisionsfreien Start des Abtastvorgangs der Mess-Einheit 10 dient.

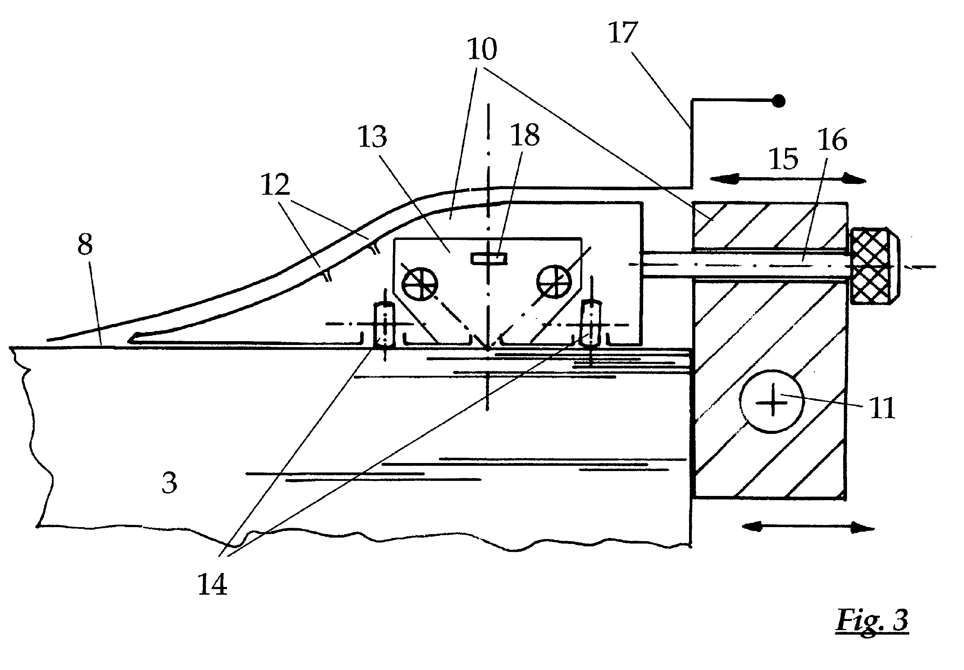

Fig 3. zeigt eine Schnittdarstellung durch einen Teil der Mess-Einheit 10 quer zur parallel zur Richtung der Achse 11 verlaufenden Abtastrichtung. Die Abtastung entlang des Druckkontrollstreifens 9 wird durch die Abstandsrollen 14 oder auch Abstandskufen unterstützt, die auch einen konstanten Mess-Abstand zwischen oberstem Druckbogen 8 und Messkopf 13 sicherstellen.

Alternativ kann der vertikale Abstand des Messkopfes 13 über dem obersten Druckbogen 8 automatisch in Verbindung mit einem Abstandssensor und einem Vertikalantrieb erfolgen, so dass keine Berührung der Unterseite der Mess-Einheit 10 mit der Oberseite des obersten Druckbogens 8 stattfindet.

Die Achse 11 kann als reine Führungsachse oder als Antriebswelle ausgelegt sein. Im ersten Fall erfolgt dann der motorische Antrieb innerhalb der Mess-Einheit 10. Die Kraftübertragung kann z.B. über Reibräder, die gegebenenfalls die Stützräder 14 sein können, oder einen Spindelantrieb erfolgen. Im zweiten Fall liegt der Antriebsmotor außerhalb der Mess-Einheit 10 und die Achse 11 fungiert als Antriebswelle z.B. über einen Linearantrieb, z.B. Spindelantrieb. Beliebige technische Kombinationen von Linearführung und -antrieb sind ausführbar.

Die Achse 11 ist mit der Höhenverstellung der automatischen Stapelabsenkung 4 gekoppelt, so dass sichergestellt ist, dass sich die Mess-Einheit 10 immer auf der gleichen Höhe im Bezug zum Auslagestapel 3 befindet.

Die Achse 11 kann über mehrere Freiheitsgrade beweglich gelagert und angetrieben sein, so dass die daran gekoppelte Mess-Einheit 10 durch oszillierende Stossbewegungen die Funktion des Geradestoßers 7 übernimmt.

Alternativ zu den Luftdüsen 12 kann ein über den Bewegungsweg der Mess-Einheit 10 ein- sowie ausschwekbarer Distanzhalter 17 vorgesehen sein, der vorzugsweise mit dem Geradestosser 7 oder der Mess-Einheit 10 selbst gekoppelt oder synchronisiert ist, wodurch verhindert wird, dass der über der Mess-Einheit 10 oder entlang der gesamten Kante des Druckbogens 8 ankommende Druckbogen die Mess-Einheit 10 berührt. Dabei wird der Distanzhalter 17 vor dem Messvorgang ein- und danach ausgeschwenkt.

Das Gehäuse der Mess-Einheit 10 nebst der darin enthaltenen Komponenten kann quer zur Längsrichtung des Druckkontrollstreifens 9 über den Lineartrieb 16 manuell oder motorisch beweglich gemäss Richtungspfeil 15 ausgelegt werden, so dass der Messkopf 13 exakt über dem Druckkontrollstreifen positioniert werden kann. Bei motorischer Ausführung des Linearantriebs 15 ist eine Regelstrecke bestehend aus den Signalen des Messkopfs 13 oder eines zusätzlichen optischen Sensors in Verbindung mit dem motorischen Antrieb ausführbar um den Messkopf 13 exakt mittig über dem Druckkontrollstreifen 9 zu positionieren.

Die Mess-Einheit 10 ist für Reinigungs- und Wartungszwecke leicht abnehmbar oder um die Achse 11 schwenkbar gestaltet. Sie ist konstruktiv so ausgelegt, dass sie unanfällig gegen Verunreinigungen wie z.B. Druckpuder ist und Vibrationen und Stösse, die durch die Geradestoßerfunktion hervorgerufen werden, standhält.

Der Messkopf 13 ist vorzugsweise konform zu ISO 13655 ausgeführt. Er kann jedoch konstruktiv abweichen und es können konstruktive Ausgestaltungen über Lichtleiter oder Strahlumlenkung vorgenommen werden um eine möglichst flache Bauweise der Mess-Einheit 10 zu erzielen. Es können auch andere Sensoren wie z.B. zur Messung der Glanzreflexion, der Messung des Härtegrades von Lacken und Farben oder zur Bildanalyse zur Abtastung verwendet werden.

Bei Schön- und Widerdruck ist zusätzlich zur Vorderseite des Druckbogens auch die Rückseite bedruckt. Hierzu kann die Messeinheit 10 so ausgelegt werden, dass zusätzlich zum oder anstatt des Messkopf(es) 13 ein weiterer Sensoren aufweisender Messkopf vorhanden ist, dessen Messöffnung an dessen Oberseite angeordnet sowie nach oben gerichtet ist und Messungen an der Widerdruckseite der Bogen, die auf dem weitern Messkopf zu liegen kommen, durchführt.

Die Übertragung der Messdaten an eine Steuer-, Regel- oder Anzeigeeinheit kann wahlweise über Datenkabel oder kabellose Funkübertragung während oder nach Abschluss des Abtastvorgangs erfolgen. Die Steuerung des Mess-Systems und die Verarbeitung der Messdaten kann ganz oder teilweise durch eine Steuer- und Auswerteelektronik innerhalb der Mess-Einheit 10 oder ganz oder teilweise außerhalb der Mess-Einheit 10 z.B. durch einen externes Steuer- und Datenverarbeitungsgerät oder durch die Steuerungselektronik der Druckmaschine erfolgen.

Die Stromversorgung der Mess-Einheit 10 kann wahlweise über Stromversorgungskabel, Schleifkontakte oder eine autonome Stromversorgung innerhalb der Mess-Einheit 10 erfolgen.

## Patentansprüche

1. Mess-Einheit (10) mit Sensoren (18) für die fortlaufende, automatische Erfassung von Farbdaten eines Druckkontrollstreifens (9) insbesondere durch Remissionsmessungen von farbig gedruckten Druckbogen (8) an einer laufenden Druckmaschine (1), der auf dem Auslagestapel (3) eines eine automatische Stapelabsenkung (4) aufweisenden Druckbogenauslegers abgelegt wird, **gekennzeichnet durch** ein die Messeinheit ein den Druckkontrollstreifen (9) des bezüglich der schon abgelegten Druckbögen deckungsgleich zu oberst auf dem Auslagestapel (3) abgelegten Druckbogens (8) abtastendes Mess-Teil und **durch** eine zumindest während der Messung dieses obersten Druckbogens (8) das Absenken deckungsgleich zu und über diesem abgelegter, weiterer Druckbogen (8) hindernde Ausbildung.

2. Mess-Einheit (10) nach Anspruch 1, **dadurch gekennzeichnet, dass** das Mess-Teil als Messkopf (13) ausgebildet ist.

3. Mess-Einheit (10) nach Anspruch 2, dass die Mess-Einheit (10) im Bereich des Druckbogenauslegers in Höhe der Oberseite des Auslagestapels (3) angeordnet ist, dass die Mess-Einheit (10) einen zu der Unterseite hin offene Messöffnung aufweisenden Messkopf (13) mit einem Gehäuse aufweist und dass dieser längs einer Achse (11) auf dem obersten, auf dem Auslagestapel (3) abgelegten Druckbogen (8) unter gleichzeitiger Abtastung des Druckkontrollstreifens (9) mittels eines Antriebes manuell oder motorisch entlangbewegbar ist.

4. Mess-Einheit nach Anspruch 3, **dadurch gekennzeichnet, dass** die Mess-Einheit (10) mit der automatischen Stapelabsenkung (4) des Druckbogenauslegers gekoppelt ist.

5. Mess-Einheit nach Anspruch einem der Ansprüche 2 bis 4, **dadurch gekennzeichnet, dass** der Messkopf (13) der Mess-Einheit (10) als das Absenken zu und über dem obersten Druckbogen abgelegter, weiterer Druckbogen (8) zumindest im Bereich des Druckkontrollstreifens (9) hindernde Ausbildung eine Linsenförmige Gestalt aufweist.

6. Mess-Einheit nach einem der vorhergehenden Ansprüche, **dadurch gekennzeichnet, dass** der Messkopf (13) der Mess-Einheit (10) rechtwinklig zu der Erstreckung der Achse (11) zu seinem Rand hin klingenförmig ausläuft.

7. Mess-Einheit nach einem der vorhergehenden Ansprüche, **dadurch gekennzeichnet, dass** der Messkopf(13) der Mess-Einheit (10) auf seiner der Unterseite mit der Messöffnung abgewandten Oberseite Luftdüsen (12) aufweist.

8. Mess-Einheit nach Anspruch 7, **dadurch gekennzeichnet, dass** in dem Messkopf (13) der Mess-Einheit (10) ein Gebläse vorgesehen ist und dass dieses an die Luftdüsen (12) angeschlossen ist.

9. Mess-Einheit nach einem der vorhergehenden Ansprüche, **dadurch gekennzeichnet, dass** die Mess-Einheit (10) mit einem diese zu Beginn des Abtastvorgangs auf dem obersten Druckbogen (8) in dem Auslagestapel (3) positionierenden Vertikalantrieb versehen ist.

10. Mess-Einheit nach einem der vorhergehenden Ansprüche, **dadurch gekennzeichnet, dass** ein ein den Startzeitpunkt des Beginns der Abtastbewegung des Messkopfes (13) bestimmendes Triggersignal an die Mess-Einheit (10) abgebender zusätzlicher Sensor vorgesehen ist,

11. Mess-Einheit nach einem der vorhergehenden Ansprüche, **dadurch gekennzeichnet, dass** der Messkopf (13) zur Unterstützung der Abtastbewegung mit ggf. auch angetriebenen Abstandsrollen (14) oder mit Gleitkufen versehen ist.

12. Mess-Einheit nach einem der vorhergehenden Ansprüche, **dadurch gekennzeichnet, dass** der vertikale Abstand der Mess-Einheit (10) und/oder des Messkopfes (13) über dem obersten Druckbogen (8) selbsttätig durch einen Regler von dem Vertikalantrieb einstellbar ist.

13. Mess-Einheit nach Anspruch 12, **dadurch gekennzeichnet, dass** der Regler einen Abstandssensor aufweist.

14. Mess-Einheit nach einem der vorhergehenden Ansprüche, **dadurch gekennzeichnet, dass** die Achse (11) der Mess-Einheit (10) rechtwinklig zu ihrer Erstreckung, also von der Oberzu ihrer Unterseite auf und ab und/oder rechtwinklig dazu hin und her oszillierend unter Bildung eines Geradestossers (7) bewegbar angetrieben ist.

15. Mess-Einheit nach einem der vorhergehenden Ansprüche, **dadurch gekennzeichnet, dass** der Messkopf (13) der Mess-Einheit (10) zu dessen Positionierung mittig über dem Druckkontrollstreifen quer (15) zur Abtastrichtung hin und her über einen Lineartrieb (16) manuell oder motorisch bewegbar ist.

16. Mess-Einheit nach einem der vorhergehenden Ansprüche, **dadurch gekennzeichnet, dass** in dem Messkopf (10) neben den Sensoren zur Remissionsmessung andere Sensoren zur Messung der Glanzreflexion, der Messung des Härtegrades von Lacken und Farben und/oder zur Bildanalyse bei der Abtastung vorgesehen sind.

17. Mess-Einheit nach einem der vorhergehenden Ansprüche, **dadurch gekennzeichnet, dass** der Messkopf (13) der Mess-Einheit (10) zwecks Messung an der Widerdruckseite der Druckbogen (8) mit seiner Unterseite nach oben und mit seiner Oberseite nach unten an der Achse (11) anbringbar ist.

18. Mess-Einheit nach einem der vorhergehenden Ansprüche, **dadurch gekennzeichnet, dass** der Messkopf (13) der Mess-Einheit (10) zwecks Messung an der Widerdruckseite der Druckbogen (8) mit einer zweiten Messöffnung nebst zugehörigen Zusatzsensoren versehen ist.

19. Mess-Einheit nach einem der vorhergehenden Ansprüche, **dadurch gekennzeichnet, dass** die Stromversorgung der Mess-Einheit (10) wahlweise über Stromversorgungskabel, Schleifkontakte oder eine autonome Stromversorgung innerhalb des Mess-Kopfes (13) erfolgt.

20. Mess-Einheit nach (10) nach Anspruch 1, **dadurch gekennzeichnet, dass** das Mess-Teil mehrere in Richtung der Achse (11) nebeneinander nach Art einer Zeile angeordnete Sensoren und/oder Messköpfe (13) zur zeilenweisen Abtastung des gesamten Druckkontrollstreifens (9) auf ein Mal aufweist.

21. Mess-Einheit nach (10) nach Anspruch 1, **dadurch gekennzeichnet, dass** als das Absenken zu und über dem obersten Druckbogen abgelegter, weiterer Druckbogen (8) zumindest im Bereich des Druckkontrollstreifens (9) hindernde Ausbildung ein über dem Bewegungsweg des Mess-Teils in den Bereich des Auslagestapels (3) ein- sowie ausschwekbarer Distanzhalter (17) vorgesehen ist (Figur 3).

22. Mess-Einheit nach Anspruch 21, **dadurch gekennzeichnet, dass** der Distanzhalter (17) mit dem Geradestosser (7) oder der Mess-Einheit (10) selbst gekoppelt oder synchronisiert ist.

23. Mess-Einheit nach einem der vorhergehenden Ansprüche, **dadurch gekennzeichnet, dass** die Mess-Einheit (10) mehrere in Richtung der Achse (11) nebeneinander nach Art einer Zeile angeordnete Sensoren und/oder Messköpfe (13) zur zeilenweisen Abtastung aufweist.
